Europäisches Patentamt

European Patent Office

Office européen des brevets

(19)

(11) Veröffentlichungsnummer: **0 258 595 B1**

## (12) EUROPÄISCHE PATENTSCHRIFT

(45) Veröffentlichungstag der Patentschrift: **24.04.91**

(21) Anmeldenummer: **87110344.6**

(22) Anmeldetag: **17.07.87**

(51) Int. Cl.5: **F16K 47/02**

(54) **Sanitärarmatur.**

(30) Priorität: **23.08.86 DE 3628692**

(43) Veröffentlichungstag der Anmeldung:
**09.03.88 Patentblatt 88/10**

(45) Bekanntmachung des Hinweises auf die
Patenterteilung:
**24.04.91 Patentblatt 91/17**

(84) Benannte Vertragsstaaten:
**AT BE CH DE ES FR GB GR IT LI NL**

(56) Entgegenhaltungen:
**EP-A- 0 021 029**
**DE-A- 3 244 175**
**FR-A- 2 250 948**
**FR-A- 2 545 577**

(73) Patentinhaber: **Hans Grohe GmbH & Co. KG**
**Auestrasse 9**
**W-7622 Schiltach(DE)**

(72) Erfinder: **Lorch, Werner**
**Am Hammergraben 84/1**
**W-7230 Schramberg(DE)**

(74) Vertreter: **Patentanwälte RUFF, BEIER und**
**SCHÖNDORF**
**Neckarstrasse 50**
**W-7000 Stuttgart 1(DE)**

## Beschreibung

Die Erfindung betrifft eine Sanitärarmatur nach dem Oberbegriff des Anspruchs 1.

Es ist bereits vielfach versucht worden, die in Wasserarmaturen, insbesondere Mischventilen, auftretenden durch Wirbelbildung 0.dg1. verursachten Geräusche zu beseitigen.

Es ist bereits bekannt (EP-A-21 029), in eine Mischkammer eines Scheibenventils eine Geräuschdämmscheibe einzubauen, die federnd gegen die Einlaßöffnung der Flüssigkeit in die Mischkammer anliegt. Die Geräuschdämmscheibe besteht vorzugsweise aus einem gummiähnlichen Material.

Weiterhin ist es bekannt (DE-A-32 30 931), in einem Anschlußstutzen einer Wasserauslaufarmatur einen rohrförmigen, als geschlossenen Hohlring ausgebildeten Schalldämpfer anzuordnen.

Ebenfalls bekannt ist es, in der Wasserzuleitung zu einem Mischventil eine durch eine Öffnung zugängliche Dämpfungskammer anzuordnen, in der ein Dämpfungselement angeordnet ist. Auch hiermit soll versucht werden, die Ausbreitung von Geräuschen zu verhindern.

Vielen bekannten Schalldämpfern ist gemeinsam, daß sie in Strömungsrichtung vor dem Mischventil angeordnet sind, da man davon ausgegangen ist, daß die Schallweiterleitung im wesentlichen über die Wassersäule erfolgt.

Weiterhin ist es bekannt (DE-A-29 07 978), eine Mischbatterie mit einem zusätzlichen Hilfdrosselorgan zu versehen, so daß praktisch zwei Drosselorgane vorhanden sind.

Der Erfindung liegt die Aufgabe zugrunde, eine geräuscharme und einfach aufgebaute Sanitärarmatur zu schaffen, bei der die Geräuscharmut unabhängig von der Art und dem Aufbau des verwendeten Mischventils gegeben ist.

Zur Lösung dieser Aufgabe ist eine Sanitärarmatur mit den Merkmalen des Anspruchs 1 vorgesehen.

Das Gegendruckelement läßt sich sehr einfach unterbringen, was zu Vorteilen beim Aufbau der Mischventile und Armaturen führt. Darüber hinaus hat die Anordnung des Gegendruckelements stromab den Vorteil, daß dadurch das Entstehen von Geräuschen verringert wird und nicht nur, ihre Weiterleitung. Es hat sich nämlich herausgestellt, daß Geräusche in der Regel dort entstehen, wo der Druckabfall am größten ist. Dies ist der fall zwischen dem Ventil und dem Wasserauslauf. Die Rückstellkraft erzeugt den Gegendruck, wobei die Rückstellkraft beispielsweise auch durch Wasserdruck erzeugbar sein kann. So kann beispielsweise eine Leitung von vor dem Ventil zur Erzeugung der Rückstellkraft verwendet werden. Selbstverständlich lich läßt sich die Rückstellkraft auch auf andere Arten erreichen, insbesondere auch durch eine Eigenfederung oder eine getrennte Feder.

In Weiterbildung kann vorgesehen sein, daß das Gegendruckelement derart ausgebildet ist, daß es bei geschlossenem Ventil den Strömungsquerschnitt zum Auslauf sperrt und bei geöffnetem Ventil freigibt. Dies bedeutet, daß das Gegendruckelenet nach der Erfindung einen Gegendruck für das aus dem Ventil auslaufende Wasser erzeugt, so daß ein zu starker Druckabfall und das dabei entstehende Geräusch verhindert wird.

Das Gegendruckelement kann beispielsweise mit Vorteil unmittelbar stromab der Schließfläche des Ventils angeordnet sein. Wenn das Steuerelement des Mischventils eine Scheibe mit einer Ausnehmung ist, so kann das Gegendruckelement direkt in dieser Ausnehmung angeordnet sein.

Erfindungsgemäß kann vorgesehen sein, daß mit zunehmender Öffnung des Ventils und/oder zunehmendem Wasserdruck hinter dem Ventil der freigegebene Strömungsquerschnitt größer wird. Damit kann erreicht werden, daß der Schalldämpfer trotz Aufbau eines Gegendrucks den Strömungsquerschnitt nicht zu stark verringert bzw. völlig freigibt.

Erfindungsgemäß kann ebenfalls vorgesehen sein, daß das Gegendruckelement ein durch den Druck des aus dem Ventil austretenden Wassers reversibel verformbares Element aufweist. In diesem Fall findet also nur eine Bewegung in einem bestimmten Bereich statt, beispielsweise an einer Membran o.dgl.

In Weiterbildung kann vorgesehen sein, daß das bewegbare bzw. verformbare Element bei seiner Bewegung bzw. Verformung mindestens eine Durchflußöffnung freigibt. Dabei ist es durchaus möglich, stufenweise mehrere Öffnungen freizugeben oder aber eine Öffnung allmählich zu vergrößern.

Es kann vorgesehen sein, daß bewegbare Element eine axial verschiebbare Hülse ist. Diese kann beispielsweise mit ihrer einen Stirnseite an einer Öffnung anliegen, so daß eine Art Ventil mit Ventilsitz gebildet ist. Im Inneren der Hülse läßt sich eine Druckfeder unterbringen. Ebenfalls möglich ist es, daß die axial verschiebbare Hülse radial verlaufende Öffnungen in einer äußeren Hülse freigibt, in der sie geführt ist.

Als verformbares Element kann erfindungsgemäß beispielsweise ein elastischer Schlauch dienen, der etwa radial verlaufende Öffnungen abdeckt und durch das Wasser, das durch diese Öff=nungen fließt, von den Öffnungen abgehoben wird. Beispielsweise ist es möglich, den Schlauch auf einen Hohlkern aufzuziehen, in dessen Mantel etwa radiale Öffnungen verlaufen. Beim Auftreten des Wasserdrucks wird der Schlauch nach außen erweitert, so daß das Wasser zwischen der Außenseite des Kerns und dem Schlauch weiterfließen kann.

Ebenfalls möglich ist es, daß das verformbare Element einen in unverformtem Zustand geschlossenen, sich bei Verformung öffnenden Schlitz aufweist.

Besonders günstig ist es, wenn das verformbare Element ein O-Ring ist, der mindestens eine, vorzugsweise mehrere radiale Öffnungen abdeckt. Zur Sicherung des O-Rings kann dieser in einer insbesondere V-förmigen Nut untergebracht sein.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

Fig. 1 eine schematische teilweise geschnittene Seitenansicht eines sanitären Mischventils;

Fig. 2 ein Gegendruckelement mit einer bewegbaren Hülse;

Fig. 3 ein Gegendruckelemt mit einem verschiebbaren Kern;

Fig. 4 ein Gegendruckelement mit einem bewegbaren Ring;

Fig. 5 ein Gegendruckelement mit einem elastischen Schlauch;

Fig. 6 ein Gegendruckelement mit einem elastischen Schlitz;

Fig. 7 ein Gegendruckelement mit einem O-Ring.

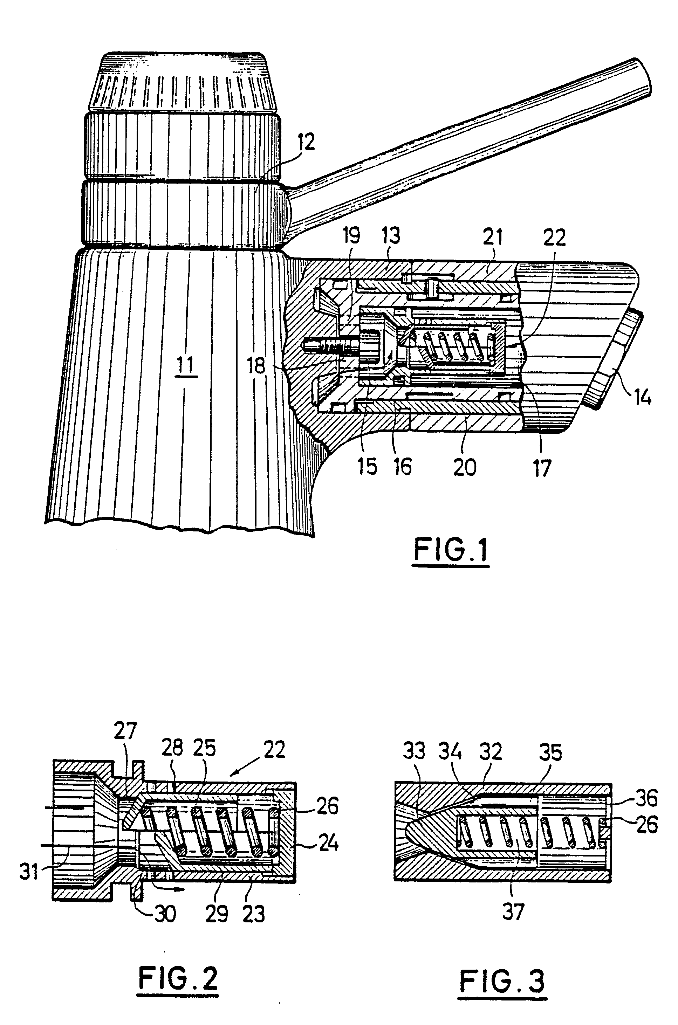

Die in Fig. 1 dargestellte sanitäre Mischarmatur enthält in einem Gehäuse 11 ein nicht dargestelltes Mischventil, das mit Hilfe eines Bedienungselementes 12 bedient werden kann. Im Bereich der Vorderseite weist das Gehäuse 11 einen flachzylindrischen Ansatz 13 auf, an dem der Auslauf 14 angebracht ist. Im Inneren des flachzylindrischen Ansatzes 13 ist mit Hilfe einer Schraube 15 ein Auslaufschaft 16 angeschraubt. Der Auslaufschaft 16 ist hohlzylindrisch ausgebildet und weist ein in Richtung des Auslaufes 14 offenes Ende 17 auf. Durch im Boden 18 des Auslaufschaftes angebrachte Bohrungen 19 gelangt das Wasser, sofern das Mischventil geöffnet ist, in das Innere des Auslaufschaftes 16.

Auf der Außenseite des Auslaufschaftes 16 ist auf diesen ein Auslaufkörper 20 aufgesetzt, der mit seinem inneren Ende in einen Zwischenraum zwischen dem Auslaufschaft 16 und dem Ansatz 13 eingreift. Außerhalb des Auslaufkörpers 20 ist ein Auslaufmantel 21 angebracht, der im Bereich seines freien Endes den Auslauf 14 aufweist. Auslaufkörper 20 und Auslaufmantel 21 lassen sich um die Längsachse des Auslaufschaftes 16 verdrehen.

Im Inneren des Auslaufschaftes 16 ist ein Gegendruckelement 22 angeordnet, durch das das Wasser zum Auslauf 14 gelangt. Einzelheiten von Gegendruckelementen sind in den Fig. 2 bis 7 dargestellt.

Fig. 2 zeigt das Gegendruckelement 22, wie es in Fig. 1 Verwendung findet. Das Element 22 enthält eine Außenhülse 23, die in ihrem linken, d. h. dem Mischventil zugewandten Bereich einen verbreiterten Durchmesser aufweist. Im rechten, d.h. dem Mischventil ab- und dem Auslauf 14 zugewandten Bereich, ist die Außenhülse 23 durch eine Bodenplatte 24 abgeschlossen, die in die Außenhülse 23 eingeschraubt ist.

Im Inneren der Außenhülse 23 ist eine Schiebehülse 25 angeordnet, die an der Innenseite der Außenhülse 23 flächig anliegt. Die Schiebehülse 25 ist zur Seite der Bodenplatte 24 hin geöffnet, so daß eine Druckfeder 26 im Inneren der Schiebehülse 25 untergebracht sein kann. Diese stützt sich einseitig auf der Bodenplatte 24 und mit ihrer anderen Seite an der entgegengesetzten Stirnseite 27 der Schiebehülse 25 ab. Die Stirnseite 27 besitzt die Form eines flachen Kegels. In der Fig. 2 ist die obere Hälfte der Schiebehülse 25 in ihrer einen Endstellung und in der unteren Hälfte in ihrer zweiten Endstellung dargestellt. Die Schiebehülse 25 läßt sich axial gegen die Wirkung der Druckfeder 26 von der linken in die rechte Endstellung verschieben.

Im Mantel der Außenhülse 23 sind mehrere radial verlaufende Bohrungen 28 angeordnet, die in der linken Endstellung der Schiebehülse 25 von dieser abgedeckt sind und in deren rechter Endstellung von dieser freigegeben werden.

Die Wirkungsweise des Gegendruckelements 22 der Fig. 2 ist die folgende. Solange das Ventil geschlossen ist, herrscht auf der in Fig. 2 linken Seite, d.h. der der Mischventil zugewandten Seite des Gegendruckelements 22 kein Wasserdruck. Daher drückt die Feder 26 die Schiebehülse in die oben dargestellte Stellung, bei der der Mantel 29 der Schiebehülse 25 die Öffnungen 28 abschließt und die Stirnfläche 27 der Schiebehülse 25 an einer schräg verlaufenden Schulter 30 anliegt. Sobald das Mischventil leicht geöffnet wird, entsteht auf der in Fig. 2 linken Seite der Schiebehülse 25 ein zunächst kleiner Wasserdruck. Dieser führt zu einem Verschieben der Schiebehülse 25 gegen die Wirkung der Feder 26 nach rechts. Bei weiter steigendem Wasserdruck wird die Schiebehülse 25 so weit weggeschoben, daß zunächst der erste Kranz von Öffnungen 28 und bei weiter steigendem Wasserdruck auch der zweite Kranz von Öffnungen 28 geöffnet wird. Das Wasser kann daher in Richtung des Pfeiles 31 durch die Öffnungen aus dem Inneren der Außenhülse 23 radial nach außen strömen, und von dort aus zum Auslauf 14. Sobald beim Schließen des Ventils der Druck wieder nachläßt, verschiebt die Feder 26 die Schiebehülse 25 in die Verschlußstellung der Öffnungen 28, so daß also durch das Gegendruckelement stromab des Mischventils ein Gegendruck aufgebaut wird, der einen zu starken Druckabfall an der Ausgangsseite des Mischventils und damit eine Geräuschbildung verhindert.

Bei der Ausführungsform nach Fig. 3 weist das Gegendruckelement ebenfalls eine Außenhülse 32 auf, in der ein Innenkörper 33 axial verschiebbar ist. Der Innenkörper 33 ist im Bereich seines dem Ventil zugewandten Endes kegelstumpfförmig ausgebildet und wirkt mit einer entsprechenden kegeligen Fläche 34 an der Innenseite der Außenhülse 32 zur Bildung eines Ventiles zusammen. Der Innenkörper 33 weist an seinem dem kegelstumpfförmigen Ende abgewandten Ende mehrere äußere Rippen 35 auf, die an der Innenwandung 36 der Außenhülse 32 anliegen und dadurch den Innenkörper 33 führen. Von der dem Ventil abgewandten Seite her erstreckt sich eine Sacklochbohrung 37 in das Innere des Innenkörpers, in der eine Druckfeder 26 angeordnet ist. Bei steigendem Wasserdruck verschiebt dieser den Innenkörper 33 gegen die Wirkung der Feder 26 in axialer Richtung von der Eingangsseite weg, so daß durch den sich zwischen der fläche 34 und der Außenseite des kegelstumpfförmigen Endes des Innenkörpers 33 gebildeten Spalt Wasser fließen kann. Dies gelangt durch den Raum zwischen den Rippen 35 zum rechten Ende der Außenhülse 32, wo es dann austreten kann.

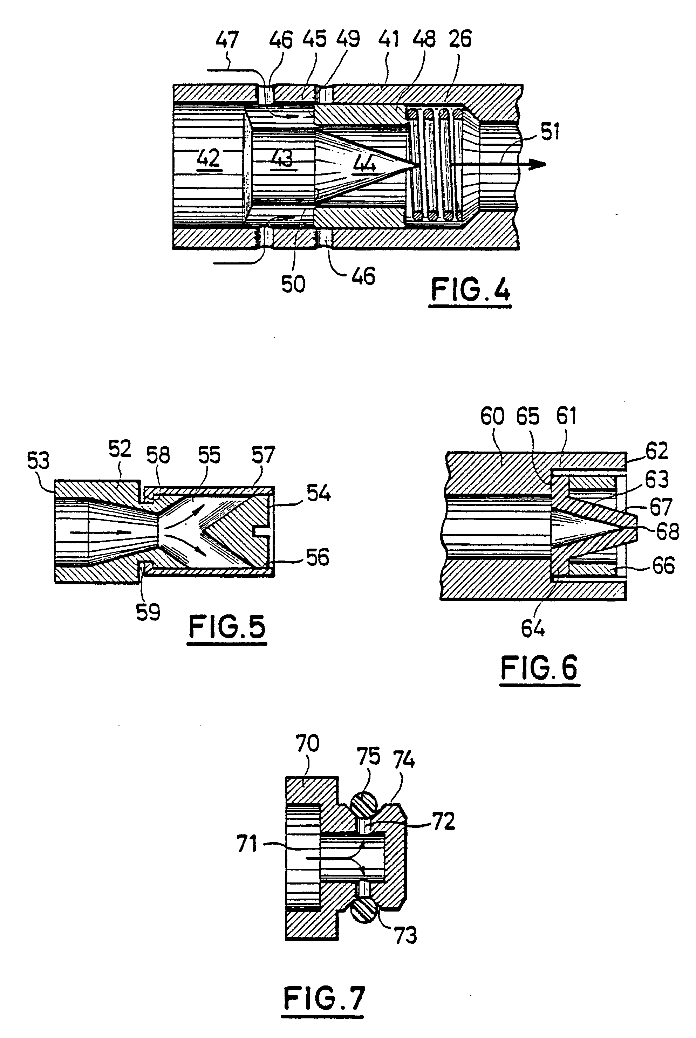

Bei der Ausführungsform nach Fig. 4 ist eine äußere Hülse 41 vorhanden, die an ihrer dem Mischventil zugewandten Seite einen Kerneinsatz 42 aufweist. Der Kerneinsatz verschließt die Außenhülse 41 auf der einen Seite. Der Kerneinsatz 42 weist einen Bereich 43 verringerten Durchmessers auf, durch den ein ringförmiger Raum zwischen dem Einsatz 43 und der Außenhülse 41 gebildet ist. An den zylindrischen Bereich verringerten Durchmessers 43 schließt sich eine Kegelspitze 44 an. In dem Bereich des ringförmigen Spaltes 45 weist die Außenhülse zwei Reihen von etwa radial verlaufenden Öffnungen 46 auf. Durch diese Öffnungen 46 kann das Wasser in Richtung des pfeiles 47 von außen in den Ringspalt 45 eindringen.

Innerhalb der Außenhülse 41 ist ein verschiebbarer Ring 48 gelagert, der von einer Druckfeder 26 beaufschlagt ist. Die Dicke des Rings entspricht dabei etwa der radialen Erstreckung des Ringspaltes 45. Bei geschlossenem Mischventil ist der Ring 48 in der dargestellten Stellung. In dem Ringspalt 45 vorhandenes Wasser könnte nicht weiterfließen. Sobald nun das Mischventil geöffnet wird und sich der Wasserdruck durch die Öffnungen 46 in den Ringspalt 45 hinein auswirkt, übt dieser Wasserdruck auf die Stirnfläche des Ringes 48 eine Kraft aus, die den Ring 48 gegen die Wirkung der Feder 26 verschiebt. Sobald die in Fig. 4 linke Stirnkante 49 des Rings die Linie 50 zwischen dem zylindrischen und dem kegelförmigen Teil des Einsatzes 42 überschreitet, entsteht ein Ringspalt, durch den das Wasser in Richtung des Pfeiles 51 durch den Schalldämpfer hindurchtreten kann. Je größer der Wasserdruck ist, desto stärker verschiebt sich der Ring 48 nach rechts, so daß nach einiger Zeit auch die zweite Reihe von Öffnungen 46 freigesetzt wird. Auch bei dieser Ausführungsform wird durch die Feder 26 stromab des Mischventils ein Gegendruck erzeugt, der einen zu starken Druckabfall verhindert. Aufgrund der Tatsache, daß die verschiebbaren Elemente federbeaufschlagt sind, verringert sich der Strömungsquerschnitt durch den Schalldämpfer umso weniger, je höher der Druck stromab des Mischventils ist.

Bei der Ausführungsform nach Fig . 5 ist ein zentraler Kern 52 vorhanden, der auf seiner dem Mischventil zugewandten Seite 53 offen und auf der gegenüberliegenden Seite 54 geschlossen ist. Im Bereich seines geschlossenen Endes 54 weist der Kern 52 mehrere etwa radial verlaufende Schlitze 55 auf, die in der Manteloberfläche 56 ausmünden.

Über den zylindrischen Abschnitt des Kerns 52 ist ein aus Gummi bestehender Schlauch 57 aufgeschoben, der mit einem Wulst 58 an seinem einen Ende in einer entsprechenden Nut 59 in der Manteloberfläche 56 des Kerns 52 eingreift. Dadurch ist der Schlauch 57 gegen Verschieben gesichert. Sobald das Wasser in Richtung der dargestellten Pfeile an der Innenseite des Schlauches 57 gelangt und der Druck ansteigt, erweitert sich der Schlauch aufgrund seiner Verformbarkeit derart, daß zwischen der Manteloberfläche 56 des Kerns 52 und der Innenseite des Schlauches zumindest im Bereich des Endes 54 ein Zwischenraum entsteht, durch den das Wasser ausfließen kann. Wiederum wird der Zwischenraum umso größer, je größer der Wasserdruck ist.

Bei der Ausführungsform nach Fig. 6 ist in das offene Ende eines Rohres 60 eine Stufenbohrung 61 angebracht, die ein Gewinde 62 aufweist. In die Stufenbohrung ist ein Gummielement 63 eingesetzt, das mit seinem Außenflansch 64 an einer Stirnfläche 65 der Stufenbohrung 61 anliegt. Festgelegt ist das Gummielement 63 durch einen Gewindering 66, der in das Gewinde 62 eingeschraubt ist und den flansch 64 des Gummielementes festhält.

Das Gummielement 63 enthält zwei Lappen 67, die in Strömungsrichtung gesehen trichterförmig verlaufen. Die beiden Enden der Lappen, die zusammen einen Winkel von etwa 30° bilden, liegen unter Eigenspannung aneinander an. Zwischen ihnen ist ein Schlitz 68 gebildet, der bei fehlendem Wasserdruck auf der dem Mischventil zugewandten, in Fig. 6 linken Seite des Gummielementes 63 geschlossen ist. Steigt nun auf der linken Seite der Druck, so bewegen sich die beiden Lappen 67 voneinander weg, so daß der Schlitz 68 sich öffnet und bei steigendem Wasserdruck größer wird. Auch hier bildet sich ein Gegendruck auf, der ein zu starkes Abfallen des Druckes am Mischventil und damit Geräuschbildung verhindert.

Bei der Ausführungsform nach Fig. 7 weist das Gegendruckelement eine einseitig axial offene Hülse 70 auf, die eine abgestufte Innenbohrung 71 aufweist. Die Innenbohrung 71 ist eine Sacklochbohrung. Aus dem Inneren der Innenbohrung 71 führen mehrere radiale Bohrungen 72 nach außen, und zwar auf den Boden einer etwa V-förmigen Nut 73, die in die Außenseite 74 der Hülse 70 eingebracht ist. In der Nut 73 liegt ein O-Ring 75, der mit Vorspannung in der Nut 73 gehalten ist. Er schließt dadurch die Bohrungen 72 ab, die einen deutlich kleineren Durchmesser aufweisen als der O-Ring selbst. Steigt in der Innenseite der Hül se 70 der Wasserdruck an, so hebt dieser den O-RinG 75 von den Öffnungen der Bohrungen 72 in der Nut 73 ab, so daß dort Wasser austreten kann. Bei sinkendem Wasserdruck schließt der O-Ring 75 die Bohrungen wieder.

**Ansprüche**

1. Sanitärarmatur mit einem Ventil , insbesondere einem Mischventil , einem Auslauf (14) und einem durch Wasserdruck gegen eine Rückstellkraft bewegbaren Gegendruckelement (22), dadurch gekennzeichnet, daß das Gegendruckelement (22) stromab des Ventils zwischen diesem und dem Auslauf (14) angeordnet ist und durch den Druck des aus dem Ventil austretenden Wassers bewegbar ist.

2. Sanitärarmatur nach Anspruch 1, dadurch gekennzeichnet, daß das Gegendruckelement (22) derart ausgebildet ist, daß es bei geschlossenem Ventil den Strömungsquerschnitt zum Auslauf (14) sperrt und bei geöffnetem Ventil freigibt.

3. Sanitärarmatur nach Anspruch 1 oder 2, dadurch gekennzeichnet, daß mit zunehmender Öffnung des Ventils und/oder zunehmendem Wasserdruck zwischen Ventil und Gegendruckelement (22) der von diesem freigegebene Strömungsquerschnitt ansteigt.

4. Sanitärarmatur nach einem der vorhergehenden Ansprüche, dadurch gekennzeichnet, daß das Gegendruckelement (22) unmittelbar stromab der Schließfläche des Ventils angeordnet ist.

5. Sanitärarmatur nach einem der vorhergehenden Ansprüche, dadurch gekennzeichnet, daß das Gegendruckelement (22) ein gegen die kraft einer Feder (26) bewegbares Element aufweist.

6. Sanitärarmatur nach einem der vorhergehenden Ansprüche, dadurch gekennzeichnet, daß das Gegendruckelement (22) ein durch den Druck des aus dem Ventil austretenden Wassers elastisch verformbares Element aufweist.

7. Sanitärarmatur nach einem der vorhergehenden Ansprüche, dadurch gekennzeichnet, daß das bewegbare bzw. verformbare Element bei seiner Bewegung bzw. Verformung mindestens eine Durchlaßöffnung (28) für das Wasser freigibt.

8. Sanitärarmatur nach einem der vorhergehenden Ansprüche, dadurch gekennzeichnet, daß das bewegbare Element eine axial verschiebbare Hülse (25, 33) ist.

9. Sanitärarmatur nach Anspruch 8, dadurch gekennzeichnet, daß die Schiebehülse (25, 33) in einer mit Öffnungen versehenen Außenhülse (23, 32) geführt ist.

10. Sanitärarmatur nach einem der Ansprüche 6 bis 9, dadurch gekennzeichnet, daß das verformbare Element ein etwa radial verlaufende Öffnungen (55) abdeckender Schlauch (57) ist.

11. Sanitärarmatur nach einem der Ansprüche 6 bis 10, dadurch gekennzeichnet, daß das verformbare Element einen in unverformtem Zustand geschlossenen, sich bei Verformung öffnenden Schlitz (68) aufweist.

12. Sanitärarmatur nach einem der Ansprüche 6 bis 11, dadurch gekennzeichnet, daß das verformbare Element ein etwa radial verlaufende Öffnungen (72) abschließender O-Ring (75) ist.

**Claims**

1. Sanitary fitting with a valve, particularly a mixer valve, a discharge opening (14) and a counter-pressure element (22) movable against a restoring force by hydraulic pressure, characterized in that the counter-pressure element (22) is located downstream of the valve between the latter and the discharge opening (14) and can be moved by the pressure of the water passing out of the valve.

2. Sanitary fitting according to claim 1, characterized in that the counterpressure element (22) is constructed in such a way that it blocks the flow-cross-section to the discharge opening (14) when the valve is closed and frees it when the valve is open.

3. Sanitary fitting according to claims 1 or 2, characterized in that with increasing opening of the valve and /or increasing hydraulic pressure between the valve and the counterpressure element (22), there is an increase in the flow-cross-section freed by the latter.

4. Sanitary fitting according to one of the preceding claims, characterized in that the counterpressure element (22) is positioned directly downstream of the valve closing surface.

5. Sanitary fitting according to one of the preceding claims, characterized in that the counterpressure element (22) has a member movable against the tension of a spring (26).

6. Sanitary fitting according to one of the preceding claims, characterized in that the counterpressure element (22) has a member which is elastically deformable by the pressure of the water passing out of the valve.

7. Sanitary fitting according to one of the preceding claims, characterized in that the movable or deformable member frees at least one passage (28) for the water during its movement or deformation.

8. Sanitary fitting according to one of the preceding claims, characterized in that the moveable member is an axially displaceable sleeve (25,33).

9. Sanitary fitting according to claim 8, characterized in that the sliding sleeve (25,33) is guided in an outer sleeve (23,32) provided with openings.

10. Sanitary fitting according to one of the claims 6 to 9, characterized in that the deformable member is a hose (57) covering roughly radially directed openings (55).

11. Sanitary fitting according to one of the claims 6 to 10, characterized in that the deformable member has a slot (68) closed in the undeformed state and opening during deformation.

12. Sanitary fitting according to one of the claims 6 to 11, characterized in that the deformable member is an O-ring, which closes roughly radially directed openings (72).

## Revendications

1. Appareil de robinetterie sanitaire comprenant un robinet, en particulier un robinet mitigeur, une sortie (14) et un élément de contre-pression (22) auquel une pression d'eau peut imprimer un mouvement à l'en-contre d'une force de rappel, caractérisé en ce que l'élément de contre-pression (22) est disposé en aval du robinet, entre celui-ci et la sortie (14), et peut être animé d'un mouvement par la pression de l'eau sortant du robinet.

2. Appareil de robinetterie sanitaire selon la revendication 1, caractérisé en ce que l'élément de contre-pression (22) est réalisé de manière qu'il bloque la section d'écoulement vers la sortie (14) quand le robinet est fermé et qu'il libère cette section quand le robinet est ouvert.

3. Appareil de robinetterie sanitaire selon la revendication 1 ou 2, caractérisé en ce que la section d'écoulement libérée par l'élément de contre-pression (22) augmente à mesure que le robinet est ouvert et/ou à mesure que la pression d'eau entre le robinet et l'élément de contre-pression (22) s'élève.

4. Appareil de robinetterie sanitaire selon une des revendications précédentes, caractérisé en ce que l'élément de contre-pression (22) est disposé directement en aval de la surface obturatrice du robinet.

5. Appareil de robinetterie sanitaire selon une des revendications précédentes, caractérisé en ce que l'élément de contre-pression (22) comporte un élément mobile déplaçable à l'encontre de la force d'un ressort (26).

6. Appareil de robinetterie sanitaire selon une des revendications précédentes, caractérisé en ce que l'élément de contre-pression (22) comporte un élément déformable élastiquement par la pression de l'eau sortant du robinet.

7. Appareil de robinetterie sanitaire selon une des revendications précédentes, caractérisé en ce que l'élément mobile ou déformable, lors de son déplacement ou de sa déformation, dégage au moins un orifice de passage (28) pour l'eau.

8. Appareil de robinetterie sanitaire selon une des revendications précédentes, caractérisé en ce que l'élément mobile est une douille (25, 33), déplaçable axialement.

9. Appareil de robinetterie sanitaire selon la revendication 8, caractérisé en ce que la douille (25, 33) est guidée pour qu'elle puisse coulisser dans une douille externe (23, 32) pourvue d'orifices.

10. Appareil de robinetterie sanitaire selon une des revendications 6 à 9, caractérisé en ce que l'élément déformable est un morceau de tuyau souple (57) qui recouvre des lumières (55) orientées à peu près radialement.

11. Appareil de robinetterie sanitaire selon une des revendications 6 à 10, caractérisé en ce que l'élément déformable présente une fente (68) fermée à l'état non déformé de l'élément et s'ouvrant lors de la déformation.

12. Appareil de robinetterie sanitaire selon une des revendications 6 à 11, caractérisé en ce que l'élément déformable est un joint torique (75) obturant des orifices (72) orientés à peu près radialement.

FIG.1

FIG.2

FIG.3

FIG.4

FIG.5

FIG.6

FIG.7